# EUROPÄISCHE PATENTSCHRIFT

(11) **EP 1 227 306 B1**
(45) Veröffentlichungstag und Bekanntmachung des Hinweises auf die Patenterteilung: **31.03.2004**
(21) Anmeldenummer: 01101786.0
(22) Anmeldetag: 26.01.2001
(51) Int. Cl.: G01G 3/14, H05K 9/00

(54) **Überspannungsgeschützte Wägezellenanlage**
Protective device against overpotential for load cells
Dispositif de protection contre les surtensions pour capteur de forces

(43) Veröffentlichungstag der Anmeldung: 31.07.2002
(73) Patentinhaber: GWT Global Weighing Technologies GmbH, 22145 Hamburg (DE)
(72) Erfinder: Riewert, Klaus Dieter, Dipl.-Phys, 22145 Hamburg (DE); Wannowius, Armin, 22926 Ahrensburg (DE)
(74) Vertreter: COHAUSZ & FLORACK

(56) Entgegenhaltungen:
- EP-A- 0 356 299
- DE-A- 2 906 669
- KESKAR P Y: "ANALYSIS OF LIGHTNING-RELATED DAMAGES TO INSTRUMENTATION AND CONTROL SYSTEMS FOR WATER AND WASTEWATER PLANTS" ISA TRANSACTIONS,US,INSTRUMENT SOCIETY OF AMERICA. PITTSBURGH, Bd. 35, Nr. 1, 1. Mai 1996 (1996-05-01), Seiten 9-15, XP000621158 ISSN: 0019-0578

## Beschreibung

Die Erfindung betrifft eine Wägeanlage umfassend mindestens eine Wägezelle mit einem Gehäuse, einem Verformungskörper, einem Dehnungsmessstreifen und mindestens einem geschirmten Anschlußkabel, sowie eine Meß- und Auswerteeinheit, wobei das Dehnungsmeßstreifensystem zumindest über das Anschlußkabel mit der Meß- und Auswerteeinheit verbunden ist und das Gehäuse mit Erde verbunden ist.

Eine solche Wägeanlage ist beispielsweise aus DE-A-2 906 669 bekannt.

Es ist aus dem Stand der Technik bekannt, daß Wägeanlagen, die einem Überspannungsrisiko - etwa durch Blitzschlag - ausgesetzt sind, an dieses Überspannungsrisiko angepaßt auszugestalten sind, um zu vermeiden, daß beim Auftreten einer Überspannung insbesondere die einen wesentlichen Bestandteil einer solchen Wägeanlage bildenden Dehnungsmeßstreifensysteme und die damit verbundene, hochempfindliche Meß- und Auswerteelektronik beschädigt werden. Hierzu ist es bekannt diverse Schutzeinrichtungen, die mit spannungsabhängigen Widerständen, Zenerdioden, Suppressordioden oder gasgefüllten Überspannungsableitern zum Teil in Verbindung mit RC-Kombinationen arbeiten, um den Aufbau von schädlichen Überspannungen zu verhindern.

Bei den bekannten Wägezellen sind an der Oberfläche eines Verformungskörpers an geeigneter Stelle Dehnungsmeßstreifen angeordnet. Diese Dehnungsmeßstreifen sind üblicherweise elektrisch als Wheatstone-Vollbrücke beschaltet. Die Ansteuerung einer derartigen Wheatstone-Vollbrücke erfolgt bekanntermaßen über zwei Speisespannungsadern und zwei Meßadern. Für diese Speisespannungsadern und Meßadern einer Wägezelle sind zum Schutz vor Überspannungen mehr oder weniger leitende Komponenten aus meßtechnischen Gründen nicht verwendbar, da sie die Meßergebnisse erheblich verfälschen würden. Demzufolge können zur Überspannungsabsicherung von Meßadern und Speisespannungsadern nur Überspannungsableiter verwendet werden, die eine Gasentladungsstrecke aufweisen. Dies ist aus dem Stand der Technik bekannt. Derartige Überspannungsableiter weisen im Betriebsfall einen sehr hohen Widerstand auf, der die Messung an der Wheatstone-Vollbrücke nicht beeinträchtigt und zünden nur im Überspannungsfall und sind dann für kurze Zeit sehr niederohmig. Diese auf Gasentladungsstrecken basierenden Überspannungsableiter sind in der Lage, kurzfristig sehr hohe Ströme aufzunehmen und kurzzuschließen. Problematisch ist bei der Absicherung der Meßadern und Speisespannungsadern über Gasentladungsstrecken, daß zwar verhindert wird, daß auf den Meßadern bzw. Speisespannungsadern zu hohe Störspannungen auftreten, jedoch im Überspannungsfall die volle Überspannung über der Strecke Verformungskörper - Dehnungsmeßstreifensystem der Wägezelle abfällt, so daß hier die Isolationsfestigkeit zwischen Verformungskörper und Dehnungsmeßstreifensystem in der Regel nicht mehr ausreicht und es zum irreversiblen Durchbruch kommt, bei dem in der Regel die Isolation zwischen Dehnungsmeßstreifensystem und Verformungskörper beschädigt wird und darüber hinaus auch häufig das Dehnungsmeßstreifensystem als solches durch Überlastung durchbrennt.

Schließlich ist bei der Absicherung einer Wägeanlage gegenüber Überspannungen zu berücksichtigen, daß doppelte Erdungen zu Problemen mit sogenannten Brummschleifen führen können. Dabei führen Ströme auf Schirmungen der Speisespannungsadern und Meßadern unter Umständen zu Brummschleifen, hervorgerufen durch Potentialunterschiede im Erdpotential, die die Meßgenauigkeit der Wägeanlage beeinträchtigen können.

Ausgehend von dem zuvor beschriebenen Stand der Technik liegt der vorliegenden Erfindung die Aufgabe zu Grunde, eine Wägeanlage der eingangs genannten Art zur Verfügung zu stellen, bei der mit einfachen Mitteln ein sicherer Überspannungsschutz unter Vermeidung von Brummschleifen gewährleistet ist.

Gemäß der Lehre der Erfindung ist die zuvor hergeleitete und aufgezeigte Aufgabe für eine Wägeanlage mit einem Gehäuse, einem Verformungskörper, einem Dehnungsmeßstreifensystem und mindestens einem geschirmten Anschlußkabel sowie mit einer Meß- und Auswerteeinheit, wobei das Dehnungsmeßstreifensystem zumindest über das Anschlußkabel mit der Meß- und Auswerteeinheit verbunden ist und das Gehäuse mit Erde verbunden ist, dadurch gelöst, daß das Gehäuse mit der Schirmung des Anschlußkabels unmittelbar oder über einen Überspannungsableiter verbunden ist. Hierdurch ist gewährleistet, daß die Wägezelle und die Schirmung einen geschlossenen Faradayschen Käfig bilden und somit die Überspannungen auf der Strecke Verformungskörper - Dehnungsmeßstreifensystem zumindest auf die Zündspannung des Überspannungsableiters begrenzt werden. Das unvermeidliche kapazitive Einkoppeln der Störspannung von der Schirmung auf die Speisespannungsadern und Meßadern ist symmetrisch, so daß das Dehnungsmeßstreifensystem der Wägezelle und der Eingangsverstärker einer Meß- und Auswerteeinheit nur kurzzeitig mit einer Gleichtaktstörung belastet werden, die nicht zu einer Zerstörung beider Elemente führt. Darüber hinaus führen die im Eingangsverstärker eingebauten RC-Netzwerke zu einer Verlangsamung des Anstiegs der eingekoppelten Störspannungen, so daß die Gefährdung für die empfindlichen Elemente weiter verringert wird.

Wird gemäß einer Alternative der erfindungsgemäßen Lehre zwischen dem Gehäuse und der Schirmung des Anschlußkabels ein Überspannungsableiter vorgesehen, so wird über diesen Überspannungsableiter die Bildung von Brummschleifen verhindert, die dadurch entstehen können, daß die Schirmung, ebenso wie das Gehäuse, an ihrem der Wägezelle abgewandten Ende ebenfalls mit Erdpotential verbunden ist.

Die Lehre der Erfindung erfährt eine vorteilhafte Ausgestaltung dadurch, daß der Überspannungsableiter als Gasentladungsstrecke ausgebildet ist. Durch diese Verwendung eines Überspannungsableiters mit Gasentladungsstrecke wird die Bildung von Brummschleifen aufgrund des sehr hohen Innenwiderstands des Überspannungsableiters vollständig vermieden.

Gemäß der Lehre der Erfindung kann ferner eine Kabelverbindungseinheit Bestandteile der Wägeanlage sein mit einem Kabelverbindungsgehäuse, mindestens einem Eingang für ein geschirmtes, mit der Wägezelle verbundenes Anschlußkabel und mindestens einem Ausgang für ein geschirmtes, mit der Meß- und Auswerteeinheit verbundenes Verbindungskabel, wobei die Schirmung des Anschlußkabels und/oder die Schirmung des Verbindungskabels separat über Überspannungsableiter mit Erde verbunden sind.

Ist bereits das Gehäuse der Wägezelle mit der Schirmung des Anschlußkabels über einen Überspannungsableiter verbunden, so ist die Anordnung eines Überspannungsableiters zwischen Schirmung des Anschlußkabels und Erde in der Kabelverbindungseinheit zur Vermeidung von Brummschleifen nicht notwendig. In dem Fall, in dem das Gehäuse der Wägezelle mit der Schirmung des Anschlußkabels unmittelbar verbunden ist, sorgt der gemäß der Lehre der Erfindung zwischen der Schirmung des Anschlußkabels und Erde vorgesehen Überspannungsableiter dafür, daß sich keine Brummschleifen bilden. Dadurch, daß die Schirmung des Anschlußkabels nicht mit der Schirmung des Verbindungskabels verbunden ist, wird eine weitere Möglichkeit zur Bildung einer Brummschleife über das Verbindungskabel ausgeschlossen. Schließlich wird die Bildung einer Brummschleife zwischen der Kabelverbindungseinheit und der Meß- und Auswerteeinheit, dadurch vermieden, daß auch die Schirmung des Verbindungskabels über ein Überspannungsableiter, der im Normalbetrieb einen vorzugsweise hohen bis sehr hohen Innenwiderstand aufweist, mit Erde verbunden ist.

Dadurch, daß gemäß einer Ausgestaltung der Lehre der Erfindung das Kabelverbindungsgehäuse mit Erde verbunden ist, wird der Blitzschutz der Kabelverbindungseinheit gewährleistet.

Schließlich kann gemäß der Lehre der Erfindung vorgesehen sein, daß die Meß- und Auswerteeinheit ein Meß- und Auswertegehäuse, eine Meßschaltung und einen Eingang für mindestens ein Anschlußkabel und/oder mindestens ein Verbindungskabel umfaßt, wobei die Schirmung des Anschlußkabels und/oder des Verbindungskabels mit der Erdklemme der Meßschaltung verbunden ist. Durch diese Verbindung wird die Überspannungssicherheit der Meß- und Auswerteeinheit gewährleistet.

Diese Überspannungssicherheit der Meß- und Auswerteeinheit wird dadurch weiter verbessert, daß die Erdklemme der Meßschaltung zusätzlich zur Schutzerde eines Netzleiters separat mit Erde verbunden ist.

Für den Fall, in dem zwischen dem Gehäuse der Wägezelle und der Schirmung des Anschlußkabels kein Überspannungsableiter vorgesehen ist und darüber hinaus keine Kabelverbindungseinheit vorgesehen ist, wird die Meß- und Auswerteeinheit gemäß der Lehre der Erfindung dadurch weiter ausgestaltet, daß die Verbindung zwischen Schirmung des Anschlußkabels und Erdklemme der Meßschaltung über einen Überspannungsableiter erfolgt. Hierdurch wird wiederum die Bildung von Brummschleifen vermieden.

Eine derart ausgestaltete Wägeanlage gewährleistet einen optimalen Überspannungsschutz bei Verwendung einfacher Mittel.

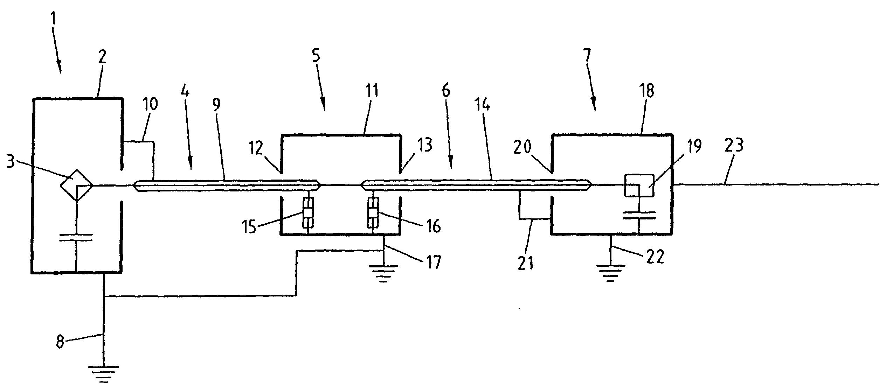

In der Zeichnung zeigt die einzige Figur ein Ausführungsbeispiel einer Wägeanlage gemäß der Lehre der Erfindung.

Das in der einzigen Figur dargestellte Ausführungsbeispiel für eine erfindungsgemäße Wägeanlage weist zunächst eine Wägezelle 1 mit einem Gehäuse 2, einem nicht dargestellten Verformungskörper, einem Dehnungsmeßstreifensystem 3 und einem geschirmten Anschlußkabel 4 auf. Das Dehnungsmeßstreifensystem 3 ist über das Anschlußkabel 4, eine Kabelverbindungseinheit 5 und ein Verbindungskabel 6 mit einer Meß- und Auswerteeinheit 7 verbunden. Das Gehäuse 2 der Wägezelle 1 ist mit Erde über eine erste Erdleitung 8 verbunden. Bei dem dargestellten Ausführungsbeispiel ist das Gehäuse 2 darüber hinaus mit der Schirmung 9 des Anschlußkabels 4 über eine Leitung 10 unmittelbar verbunden.

Die Kabelverbindungseinheit 5 des dargestellten Ausführungsbeispiels einer erfindungsgemäßen Wägeanlage weist ein Kabelverbindungsgehäuse 11, einen Eingang 12 für das geschirmte, mit der Wägezelle 1 verbundene Anschlußkabel 4 und einen Ausgang 13 für das geschirmte, mit der Meß- und Auswerteeinheit 7 verbundene Verbindungskabel 6 auf. Gemäß der Lehre der Erfindung sind die Schirmung 9 des Anschlußkabels 4 und die Schirmung 14 des Verbindungskabels 6 separat über zwei als Gasentladungsstrecke ausgebildete Überspannungsableiter 15, 16 und eine zweite Erdleitung 17 mit Erde verbunden. Über dieselbe Erdleitung 17 ist auch das Kabelverbindungsgehäuse 11 mit Erde verbunden.

Die Meß- und Auswerteeinheit 7 weist ein Meß- und Auswertegehäuse 18, eine Meßschaltung 19 und einen Eingang 20 für das Verbindungskabel 6 auf. Gemäß der Lehre der Erfindung ist die Schirmung 14 des Verbindungskabels 6 über eine Leitung 21 mit der Erdklemme der Meßschaltung 19 verbunden, die wiederum über eine dritte Erdleitung 22 mit Erde verbunden ist. Dabei erfolgt die Verbindung der Erdklemme der Meßschaltung 19 mit Erde zusätzlich zur Schutzerde eines Netzleiters 23.

Über die Bildung eines Faradayschen Käfigs bestehend aus dem Gehäuse 2 der Wägezelle 1, der Schirmung 9 des Anschlußkabels 4, dem Kabelverbindungsgehäuse 11 der Kabelverbindungseinheit 5, der Schirmung 14 des Verbindungskabels 6 und dem Meß- und Auswertegehäuse 18 der Meß- und Auswerteeinheit 7 ist ein sicherer Überspannungsschutz des Dehnungsmeßstreifensystems 3 und der Meßschaltung 19 gewährleistet. Über die Trennung der Schirmung 9 des Anschlußkabels 4 und der Schirmung 14 des Verbindungskabels 6 ist die Brummschleifenbildung über unterschiedliche Potentiale an der ersten Erdleitung 8 und der dritten Erdleitung 22 gewährleistet. Durch die Anordnung der Überspannungsableiter 15, 16 in der Kabelverbindungseinheit zwischen der Schirmung 9 des Anschlußkabels 4 und der Schirmung 14 des Verbindungskabels 6 ist die Bildung von Brummschleifen über unterschiedliche Potentiale zwischen der ersten Erdleitung 8 und der zweiten Erdleitung 17 einerseits sowie der zweiten Erdleitung 17 und der dritten Erdleitung 22 andererseits gewährleistet. Als Überspannungsableiter eignet sich beispielsweise der auf einer Gasentladungsstrecke basierende Überspannungsableiter A81.C90X der Firma Siemens, der eine Zündspannung von 400 V und eine Brennspannung von 90 V aufweist. Die Erdleitungen 8, 17, 23 sollten hinreichend stark dimensioniert werden (beispielsweise etwa ein Querschnitt von mindestens 10 mm²) um eine sichere Ableitung der Überspannungen zu gewährleisten.

Üblicherweise wird eine Wägeanlage, wie sie in der einzigen Figur anhand eines Ausführungsbeispiels beispielhaft dargestellt ist, derart ausgeführt, daß mehrere Wägezellen mit einer Kabelverbindungseinheit 5 verbunden werden und daß mehrere Kabelverbindungseinheiten 5 mit einer Meß- und Auswerteeinheit 7 verbunden sind. Es sind jedoch unterschiedlichste Konfigurationen bis hin zur direkten Verbindung zwischen einer Wägezelle 1 mit einer Meß- und Auswerteeinheit 7 ohne zwischengeschaltete Kabelverbindungseinheit 5 denkbar.

## Patentansprüche

1. Wägeanlage umfassend mindestens eine Wägezelle (1) mit einem Gehäuse (2), einem Verformungskörper, einem Dehnungsmeßstreifen (3) und mindestens einem geschirmten Anschlußkabel (4), sowie eine Meß- und Auswerteeinheit (7), wobei das Dehnungsmeßstreifensystem (3) zumindest über das Anschlußkabel (4) mit der Meß- und Auswerteeinheit (7) verbunden ist und das Gehäuse (2) mit Erde verbunden ist,
**dadurch gekennzeichnet, daß** das Gehäuse (2) mit der Schirmung (9) des Anschlußkabels (4) unmittelbar oder über einen Überspannungsableiter verbunden ist.

2. Wägeanlage (1) nach Anspruch 1, in welche der Überspannungsleiter als Gasentladungsstrecke ausgebildet ist.

3. Wägeanlage nach Anspruch 1 oder 2, in welche die Wägeanlage eine Kabelverbundungseinheit (5) umfaßt mit einem Kabelverbindungsgehäuse (11), mindestens einem Eingang (12) für ein geschirmtes, mit der Wägezelle (1) verbundenes Anschlußkabel (4) und mindestens einem Ausgang (13) für ein geschirmtes, mit der Meß- und Auswerteeinheit (7) verbundenes Verbindungskabel (6), wobei die Schirmung (9) des Anschlußkabels (4) und/oder die Schirmung (14) des Verbindungskabels (6) separat über Überspannungsableiter (15, 16) mit Erde verbunden ist.

4. Wägeanlage nach Anspruch 3, in welche das Kabelverbindungsgehäuse (11) mit Erde verbunden ist.

5. Wägeanlage nach einem der Ansprüche 1-4, in welche die Meß- und Auswerteeinheit (7) ein Meß- und Auswertegehäuse (18), eine Meßschaltung (19) und einen Eingang (20) für mindestens ein Anschlußkabel (4) umfasst und/oder mindestens ein Verbindungskabel (6) umfaßt, wobei die Schirmung (9, 14) des Anschlußkabels (4) und/oder des Verbindungskabels (6) mit der Erdklemme der Meßschaltung (19) verbunden ist.

6. Wägeanlage nach Anspruch 5, in welche die Erdklemme der Meßschaltung (19) zusätzlich zur Schutzerde eines Netzleiters (23) separat mit Erde verbunden ist.

7. Wägeanlage nach Anspruch 5 oder 6, in welche die Verbindung zwischen der Schirmung (9) des Anschlußkabels und der Erdklemme der Meßschaltung (19) über einen Überspannungsableiter erfolgt.

## Claims

1. A weighing system comprising at least one load cell (1) with a housing (2), a deformation element, a wire strain gauge (3) and at least one shielded connecting cable (4), as well as a measuring and evaluating unit (7), wherein the wire strain gauge (3) is connected to the measuring and evaluating unit (7) at least via the connecting cable (4), and wherein the housing (2) is connected to ground, **characterized in that** the housing (2) is either connected to the shielding (9) of the connecting cable (4) directly or via a surge arrester.

2. The weighing system (1) according to Claim 1, wherein the surge arrester is realized in the form of a gas discharge arrester.

3. The weighing system according to Claim 1 or 2, wherein the weighing system comprises a cable connecting unit (5) with a cable connecting housing (11), at least one input (12) for a shielded connecting cable (4) that is connected to the load cell (1) and at least one output (13) for a shielded interconnection cable (6) that is connected to the measuring and evaluating unit (7), wherein the shielding (9) of the connecting cable (4) and/or the shielding (14) of the interconnection cable (6) is/are separately connected to ground via surge arresters (15, 16).

4. The weighing system according to Claim 3, wherein the cable connecting housing (11) is connected to ground.

5. The weighing system according to one of Claims 1 to 4, wherein the measuring and evaluating unit (7) comprises a measuring and evaluating housing (18), a measuring circuit (19) and an input (20) for at least one connecting cable (4) and/or at least one interconnection cable (6), wherein the shielding (9, 14) of the connecting cable (4) and/or the interconnection cable (6) is connected to the ground terminal of the measuring circuit (19).

6. The weighing system according to Claim 5, wherein the ground terminal of the measuring circuit (19) is not only connected to the protective ground of a supply main (23), but also separately connected to ground.

7. The weighing system according to Claim 5 or 6, wherein the shielding (9) of,the connecting cable is connected to the ground terminal of the measuring circuit (19) via a surge arrester.

## Revendications

1. Installation de pesée comportant au moins une cellule de presée (1) comportant un boîtier (2), un corps de déformation, une jauge extensométrique (3) et au moins un câble de raccordement blindé (4), ainsi qu'une unité de mesure et d'évaluation (7), le système de jauge extensométrique (3) étant relié au moins par l'intermédiaire du câble de raccordement (4) à l'unité de mesure et d'évaluation (7), et le boîtier (2) étant relié à la terre, **caractérisée en ce que** le boîtier (2) est relié au blindage (9) du câble de raccordement (4) directement ou par l'intermédiaire d'un dispositif de dérivation des surtensions.

2. Installation de pesée (1) selon la revendication 1, dans laquelle le dispositif de dérivation des surtensions est agencé sous la forme d'un circuit de décharge dans un gaz.

3. Installation de pesée (1) selon la revendication 1 ou 2, dans laquelle l'installation de pesée comprend une unité (5) de raccordement de câble comportant un boîtier (11) de liaison de câble, au moins une entrée (12) pour un câble de raccordement blindé (4), relié à la cellule de pesée (1), et au moins une sortie (13) pour un câble de liaison blindé (6), relié à l'unité de mesure et d'évaluation (7), le blindage (9) du câble de raccordement (4) et/ou le blindage (14) du câble de liaison (6) étant reliés séparément à la terre par l'intermédiaire de dispositifs de dérivation des surtensions (15, 16).

4. Installation de pesée (1) selon la revendication 3, dans laquelle le boîtier (11) de liaison du câble est relié à la terre.

5. Installation de pesée (1) selon l'une des revendications 1 à 4, dans laquelle l'unité de mesure et d'évaluation (7) comprend un boîtier de mesure et d'évaluation (18), un circuit de mesure (19) et une entrée (20) pour au moins un câble de raccordement (4) et/ou comprend au moins un câble de liaison (6), le blindage (9, 14) du câble de raccordement (4) et/ou du câble de liaison (6) étant relié à la borne de terre du circuit de mesure (19).

6. Installation de pesée (1) selon la revendication 5, dans laquelle la borne de terre du circuit de mesure (19) est en outre reliée séparément à la terre, en plus de la terre de protection d'un conducteur (23) du réseau.

7. Installation de pesée selon la revendication 5 ou 6, dans laquelle la liaison entre le blindage (9) du câble de raccordement et la borne de terre du circuit de mesure (19) s'effectue au moyen d'un dispositif de dérivation des surtensions.
